(19) Europäisches Patentamt
European Patent Office
Office européen des brevets

(11) **EP 1 831 949 B1**

(12) **EUROPEAN PATENT SPECIFICATION**

(45) Date of publication and mention of the grant of the patent:
**11.02.2015 Bulletin 2015/07**

(21) Application number: **05821941.1**

(22) Date of filing: **22.12.2005**

(51) Int Cl.:
*H01M 10/052* (2010.01)  *H01M 2/22* (2006.01)
*H01M 2/26* (2006.01)  *H01M 2/30* (2006.01)
*H01M 10/0585* (2010.01)  *H01M 10/613* (2014.01)
*H01M 10/647* (2014.01)  *H01M 10/6555* (2014.01)

(86) International application number:
**PCT/KR2005/004454**

(87) International publication number:
**WO 2006/068431 (29.06.2006 Gazette 2006/26)**

(54) **HIGH POWER LITHIUM UNIT CELL AND HIGH POWER LITHIUM BATTERY PACK HAVING THE SAME**

HOCHLEISTUNGS-LITHIUMEINHEITS-ZELLE UND HOCHLEISTUNGS-LITHIUMBATTERIEPACK DAMIT

CELLULE UNITAIRE AU LITHIUM DE HAUTE PUISSANCE ET BLOC DE BATTERIES AU LITHIUM DE HAUTE PUISSANCE LA COMPRENANT

(84) Designated Contracting States:
**CH DE FR GB LI**

(30) Priority: **22.12.2004 KR 20040110550**

(43) Date of publication of application:
**12.09.2007 Bulletin 2007/37**

(73) Proprietor: **SK Innovation Co., Ltd.**
**Jongno-gu**
**Seoul**
**110-110 (KR)**

(72) Inventors:
• **OH, Jeon Keun**
**Daejeon 305-761 (KR)**
• **LEE, Joong Hui**
**Daejeon 305-756 (KR)**
• **PARK, Eun Sung**
**Daejeon 302-509 (KR)**

(74) Representative: **Pecher, Gilles et al**
**Cabinet Beau de Loménie**
**158, rue de l'Université**
**75340 Paris Cedex 07 (FR)**

(56) References cited:
EP-A1- 0 570 590  EP-A1- 0 766 327
WO-A1-94/10710  DE-A1- 19 943 961
KR-A- 20010 008 762  KR-A- 20020 012 397
KR-A- 20020 012 397  KR-A- 20020 093 781
US-A1- 2003 224 246  US-A1- 2004 038 124
US-A1- 2005 238 953

## Description

### Technical Field

The present invention relates, in general, to a high power lithium unit cell and a high power lithium battery pack having the high power lithium unit cell and, more particularly, to a high power lithium unit cell and a high power lithium battery pack having the high power lithium unit cell, which increases the width of an electrode terminal of a lithium battery, thus reducing heat generation and a potential drop due to the resistance of the electrode terminal, and efficiently eliminating generated heat.

### Background Art

A secondary battery is called a rechargeable battery, unlike a primary battery which is not rechargeable. The secondary battery has been widely used in high-technology electronic equipment, such as cellular phones, notebook computers, or camcorders.

Particularly, the operating voltage of a lithium battery is 3.6V, and is 3 times as much as a nickel-cadmium battery or a nickel-hydrogen battery, which are widely used as power sources for electronic equipment. Further, the lithium battery has high energy density per unit weight. For these reasons, the lithium battery has progressed rapidly.

Such a lithium battery uses a lithium-based oxide as the active material of cathode, and a carbon material as the active material of anode. Generally, the lithium battery is classified into a liquid electrolyte battery and a polymer electrolyte battery. A battery using a liquid electrolyte is referred to as a lithium ion battery, and a battery using a polymer electrolyte is referred to as a lithium polymer battery. Since the lithium polymer battery, recently gaining popularity, is made of a flexible material, the shape of the battery may be variously changed. Further, the lithium polymer battery is excellent in stability and is light in weight, so that it is advantageous when necessary to achieve slim and lightweight portable electronic equipment.

Meanwhile, the lithium battery is variously manufactured, depending on the shape of a case which holds an electrode assembly. The lithium battery may have a cylindrical shape, a square shape, a pouch shape, etc. Generally, a cylindrical lithium battery uses a cylindrical aluminum housing, a square lithium battery uses a square aluminum housing, and a pouch-shaped battery uses a pouch housing made of a thin plate.

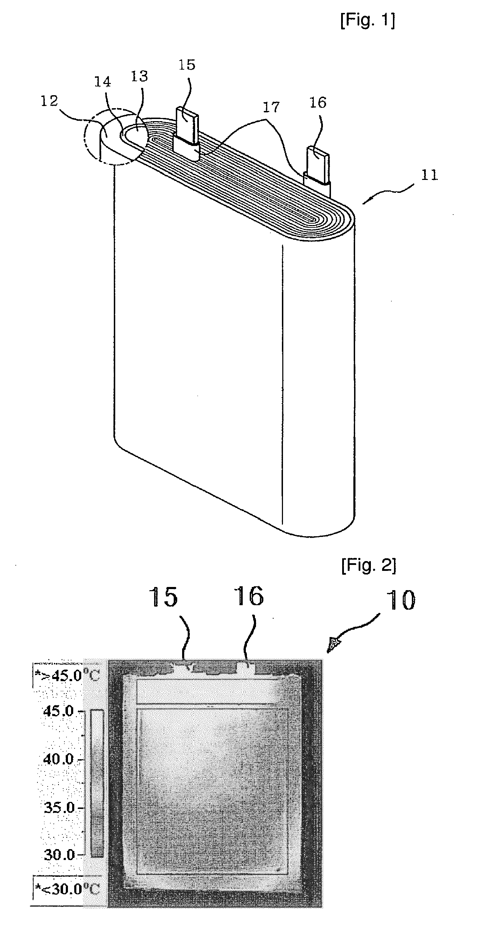

FIG. 1 is a perspective view of a conventional lithium unit cell, and schematically shows a body of the square lithium unit cell. FIG. 2 is a photograph showing the overheat state of the conventional lithium unit cell, after a lithium battery has discharged the current of about 30A.

As shown in FIG. 1, the body 11 of the conventional lithium unit cell includes an anode plate 12, a cathode plate 13, and a separator 14. The anode plate 12 comprises an anode collector coated with the active material layer of anode. The cathode plate 13 comprises a cathode collector coated with the active material layer of cathode. The separator 14 is inserted between the anode plate 12 and the cathode plate 13. After the anode plate 12, the separator 14, and the cathode plate 13 are sequentially arranged, they are wound and compressed, so that the body 11 of the conventional lithium unit cell is completed.

In this case, the anode plate 12 and the cathode plate 13 are welded to an anode terminal 15 and a cathode terminal 16, respectively, so that they are exposed to the outside of the body 11. In this case, the anode terminal 15 is made of nickel, and the cathode terminal 16 is made of aluminum.

Both the anode terminal 15 and the cathode terminal 16 are surrounded with protective tape 17 so as to prevent the portions exposed from the body 11 from being damaged.

Afterwards, the aforementioned body 11 is inserted into and assembled with a square aluminum housing, so that the lithium unit cell is obtained.

Currently, the lithium battery has been developed to have a high capacity of energy so as to be used for a lengthy period of time with only a single charging operation. However, a hybrid car requires a battery which is far smaller and lighter than that of an electric car and has a high momentary output. That is, since if the hybrid car needs energy, an engine may provide energy, the hybrid car does not need a large capacity of battery. Thus, the battery of the hybrid car emits stored energy for just several minutes or seconds, thus supplying power to the car, and must be capable of being recharged within a short period of time.

However, when the battery outputs high energy and is then recharged, a large quantity of heat is generated. Unless the heat is suppressed, the capacity and life-span of the battery may be reduced, and the battery may be broken or damaged.

When a high power battery is used, such as a battery for a hybrid car, charging and discharging speed of which is several times faster than that of the conventional lithium unit cell, a great deal of current flows in both the anode terminal 15 and the cathode terminal 16 which are exposed to the outside of the body 11.

Thus, as shown in FIG. 2, the conventional lithium battery 10 is problematic in that heat generation is concentrated around the anode terminal 15 and the cathode terminal 16, due to the resistance of the narrow anode terminal 15 and cathode terminal 16, so that the battery may be overheated to about 45°C or higher and a potential drop may occur.

Further, the conventional lithium battery 10 is problematic in that electrochemical reaction of the lithium battery 10 is concentrated on a place near the anode terminal 15 and cathode terminal 16, so that heat is locally generated, and thereby, the lithium battery 10 is locally aged, thus shortening the life-span of the lithium battery 10 and causing damage to the battery, therefore leading to the possibility of fire or an explosion. Further, EP 0 570 590 discloses a thin battery and a monolithic thin battery.

## Disclosure of Invention

### Technical Problem

Accordingly, the present invention has been made keeping in mind the above problems occurring in the prior art, and an object of the present invention is to provide a high power lithium unit cell and a high power lithium battery pack having the high power lithium unit cell, which reduce the resistance of the battery, thus reducing the loss of energy, for example, heat generation and a potential drop that occur during a high power charging operation or discharging operation.

Another object of the present invention is to provide a high power lithium unit cell and a high power lithium battery pack having the high power lithium unit cell, which prevent an electrochemical reaction from being concentrated on a portion near an anode terminal and a cathode terminal of a lithium battery when a charging or discharging operation is conducted at a high speed, thus allowing an electrochemical reaction to be uniformly performed throughout both the anode and cathode.

A further object of the present invention is to provide a high power lithium unit cell and a high power lithium battery pack having the high power lithium unit cell, which prevent damage and leakage of a lithium battery due to the volume expansion of the battery when the battery is recharged or discharged.

A still further object of the present invention is to provide a high power lithium unit cell and a high power lithium battery pack having the high power lithium unit cell, which efficiently disperse cool heat generated during a high power charging or discharging operation, and efficiently heat a low-temperature battery to an optimal temperature range.

### Technical Solution

In order to accomplish the object, the present invention provides a high power lithium unit cell, including at least one rectangular anode plate having an anode collector, at least one surface of the anode collector being coated with an active material of anode; at least one rectangular cathode plate having a cathode collector, at least one surface of the cathode collector being coated with an active material of cathode; at least one separation film inserted between the rectangular anode plate and the rectangular cathode plate, and providing electric insulation; an anode terminal connected to an anode plate connecting part which protrudes from either of two long sides of four sides of the rectangular anode plate; and a cathode terminal connected to a cathode plate connecting part which protrudes from either of two long sides of four sides of the rectangular cathode plate.

According to the preferred embodiment, the anode terminal and the cathode terminal protrude in opposite directions.

According to another preferred embodiment, the anode terminal and the cathode terminal protrude in the same direction.

Further, the present invention provides a high power lithium battery pack, including at least one high power lithium unit cell, including at least one rectangular anode plate, separation film, and rectangular cathode plate sequentially laminated, an anode terminal extending outwards from either of two long sides of four sides of the rectangular anode plate, and a cathode terminal extending outwards from either of two long sides of four sides of the rectangular cathode plate; at least two gaskets laminated on both surfaces of the high power lithium unit cell; and a pair of support plates laminated on the outermost gaskets at least.

### Brief Description of the Drawings

FIG. 1 is a perspective view of a conventional lithium unit cell;
FIG. 2 is a photograph showing an overheated state of the conventional lithium unit cell;
FIG. 3 is an exploded perspective view of a high power lithium unit cell, according to the first embodiment of the present invention;

FIG. 4 is a perspective view of the high power lithium unit cell, according to the first embodiment of the present invention;

FIG. 5 is an exploded perspective view of a high power lithium battery pack having a high power lithium unit cell, according to the second embodiment of the present invention;

FIG. 6 is a perspective view of the high power lithium battery pack having the high power lithium unit cell, according to the second embodiment of the present invention;

FIG. 7 is a perspective view showing a cooling method for the high power lithium battery pack having the high power lithium unit cell, according to the second embodiment of the present invention; and

FIG. 8 is a perspective view of a high power lithium unit cell, according to the third embodiment of the present invention.

## Best Mode for Carrying Out the Invention

Hereinafter, a high power lithium unit cell and a high power lithium battery pack having the high power lithium unit cell, according to the present invention, will be described in detail.

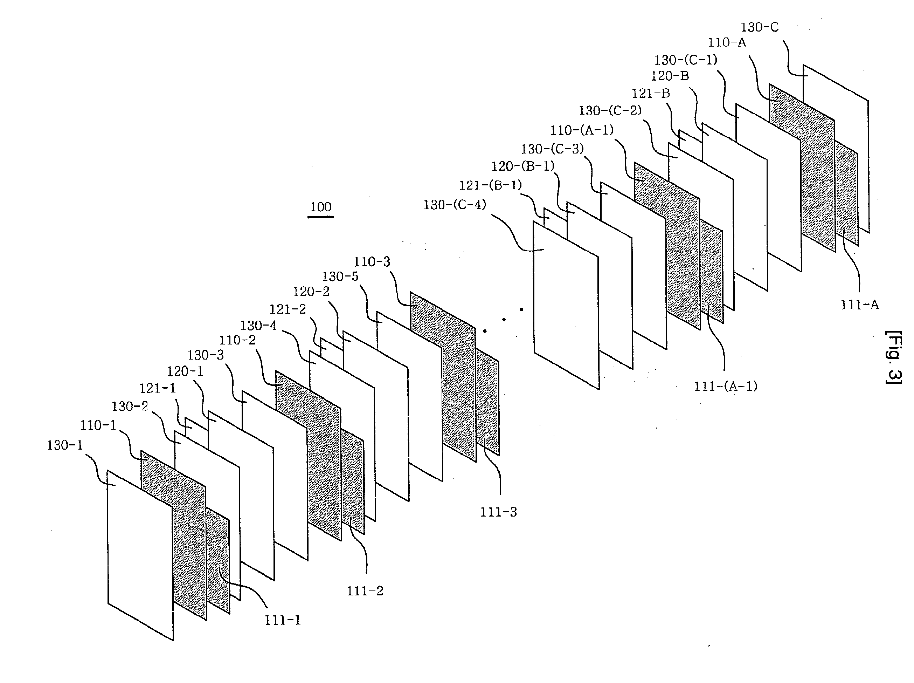

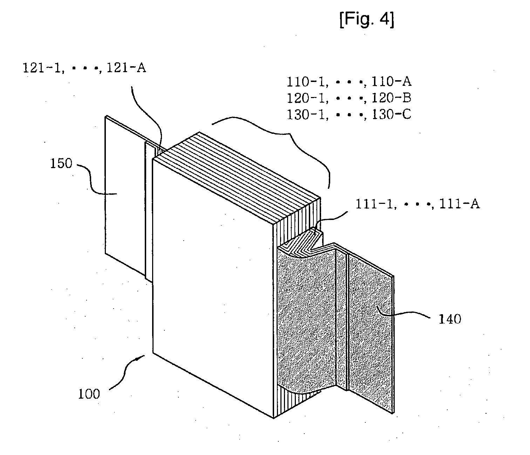

FIG. 3 is an exploded perspective view of a high power lithium unit cell, according to the first embodiment of the present invention, and FIG. 4 is a perspective view of the high power lithium unit cell, according to the first embodiment of the present invention.

Referring to FIGS. 3 and 4, a high power lithium unit cell 100 according to the first embodiment of this invention includes anode plates 110-1, ..., 110-A, cathode plates 120-1, ..., 120-B, separation films 130-1, ..., 130-C, anode plate connecting parts 111-1, ..., 111-A, cathode plate connecting parts 121-1, ..., 121-B, an anode terminal 140, and a cathode terminal 150. In the high power lithium unit cell 100 according to the first embodiment of this invention, the anode plate connecting parts 111-1, ..., 111-A, and the cathode plate connecting parts 121-1, ..., 121-B are directly connected to the anode terminal 140 and the cathode terminal 150, respectively. The anode terminal 140 and the cathode terminal 150 are exposed to the outside, and are surrounded with a predetermined packing material.

Each of the anode plate 110-1, ..., 110-A is provided with an anode collector which comprises a rectangular metal thin plate. The anode collector may be made of an aluminum thin plate. At least one surface of the anode collector is coated with the active material of anode. The active material of anode may comprise a mixture consisting of a lithium-based oxide which is a main element, a binder, a plasticizer, a conductive material, etc.

Each of the cathode plate 120-1, ..., 120-B is provided with a cathode collector which comprises a rectangular metal thin plate. The cathode collector may be made of a copper thin plate. At least one surface of the cathode collector is coated with the active material of cathode. The active material of cathode may comprise a mixture consisting of a carbon material which is a main element, a binder, a plasticizer, a conductive material, etc.

The separation films 130-1, ..., 130-C are inserted between the anode plates 110-1, ..., 110-A and the cathode plates 120-1, ..., 120-B, thus serving to electrically insulate the anode plates and the cathode plates from each other.

Each of the anode plate connecting parts 111-1, ..., 111-A and the cathode plate connecting parts 121-1, ..., 121-B extends outwards from along side of four sides of each of the anode plates 110-1, ..., 110-A and the cathode plates 120-1, ..., 120-B. In this case, each of the anode plate connecting parts 111-1, ..., 111-A and the cathode plate connecting parts 121-1, ..., 121-B is about 1/5 ~ 1 times as wide as a long side of each of the rectangular anode plates 110-1, ..., 110-A and the rectangular cathode plates 120-1, ..., 120-B.

The anode terminal 140 is attached to the anode plate connecting parts 111-1, ..., 111-A which are exposed to the outside, thus forming one electrode.

Similarly, the cathode terminal 150 is attached to the cathode plate connecting parts 121-1, ..., 121-B, thus forming one electrode.

According to the preferred embodiment, the anode plate connecting parts 111-1, ..., 111-A and the cathode plate connecting parts 121-1, ..., 121-B may be connected to the anode terminal 140 and the cathode terminal 150, respectively, by welding the anode plate connecting parts 111-1, ..., 111-A to the anode terminal 140 and welding the cathode plate connecting parts 121-1, ..., 121-B to the cathode terminal 150.

According to another preferred embodiment, the anode plate connecting parts 111-1, ..., 111-A and the cathode plate connecting parts 121-1, ..., 121-B may be connected to the anode terminal 140 and the cathode terminal 150, respectively, by applying a highly conductive material to the anode plate connecting parts 111-1, ..., 111-A and the cathode plate connecting parts 121-1, ..., 121-B and thereafter compressing the anode plate connecting parts and the cathode plate connecting parts, coated with the highly conductive material, against the anode terminal 140 and the cathode terminal 150, respectively. Further, they may be connected to each other using an adhesive containing a highly conductive material. In this case, the highly conductive material for coating or adhesion may be selected from the group consisting of gold, carbon nanotube, etc.

Meanwhile, a conductor, such as the electrode terminal, including the anode terminal 140 and the cathode terminal 150 of the high power lithium unit cell 100, has a resistance and a heat quantity which are calculated according to the following equations 1 and 2.

[Equation 1]

$$(resistance) = (specific resistance) S \frac{length of conductor}{sectional area of conductor}$$

[Equation 2]

$$(heat quantity of conductor)] \ current^2 S (resistance)$$

As shown in the equations 1 and 2, the high power lithium unit cell 100 according to this invention has the anode plate connecting parts 111-1, ..., 111-A and the cathode plate connecting parts 121-1, ..., 121-B on two long sides of a rectangle. Thus, the sectional areas of the electrode terminals 140 and 150, the anode plate connecting parts 111-1, ..., 111-A, and the cathode plate connecting parts 121-1, ..., 121-B are increased, and the length of the electrode terminals 140 and 150 is reduced, in comparison with the conventional lithium unit cell 10 shown in FIG. 1. Thus, when the same quantity of current flows during a charging or discharging operation, the quantity of generated heat is dramatically reduced.

Therefore, when the high power lithium unit cell 100 according to this invention is used in a high power battery, such as a hybrid car battery, the quantity of generated heat is small, and the loss of energy, such as a potential drop, is reduced, compared to the conventional lithium unit cell 10 of FIG. 1.

Further, the high power lithium unit cell 100 according to this invention is constructed so that the anode plate connecting parts 111-1, ..., 111-A and the cathode plate connecting parts 121-1, ..., 121-B are connected to the anode terminal 140 and the cathode terminal 150, respectively. Thus, when the high power lithium unit cell of this invention is recharged or discharged at a high speed, a local electrochemical reaction is reduced in comparison with the conventional lithium unit cell 10 of FIG. 1. Thereby, the electrochemical reaction is uniformly performed in respective layers and parts of the battery.

According to the preferred embodiment of this invention, the high power lithium battery may be a simple structure obtained by arranging the separation film 130-1, the anode plate 110-1, the separation film 130-2, the cathode plate 120-1, and the separation film 130-3 in layers. Preferably, the high power lithium battery may have a multi-layered structure obtained by sequentially laminating several anode plates, cathode plates, and separation films.

Further, the anode plates 110-1, ..., 110-A, the cathode plates 120-1, ..., 120-B, and the separation films 130-1, ..., 130-C may be connected to each other in the form of one film, that is, a winding form or a jelly roll form. Further, they may be separated from each other in a stacking form.

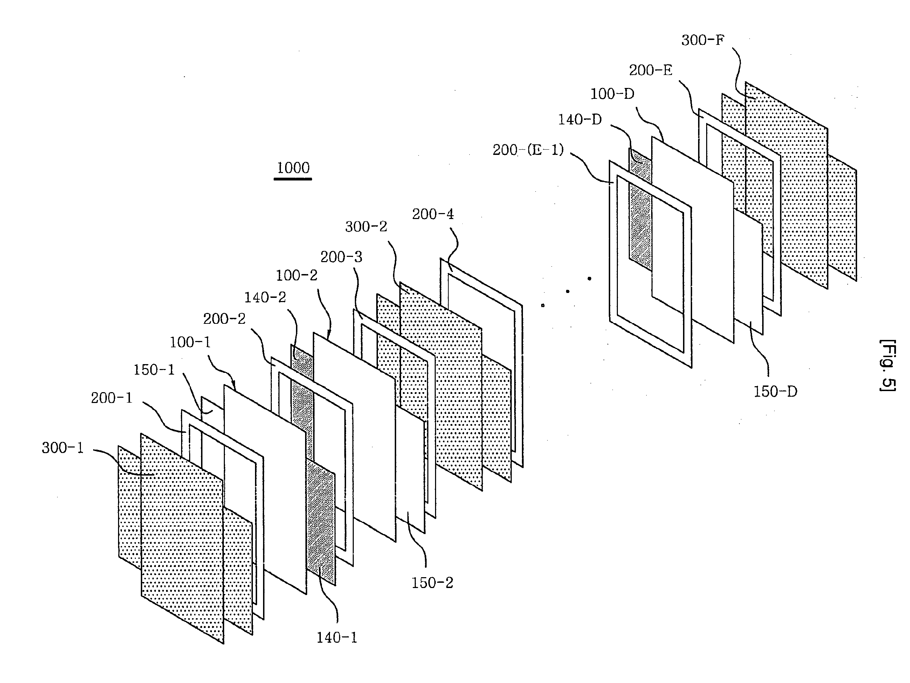

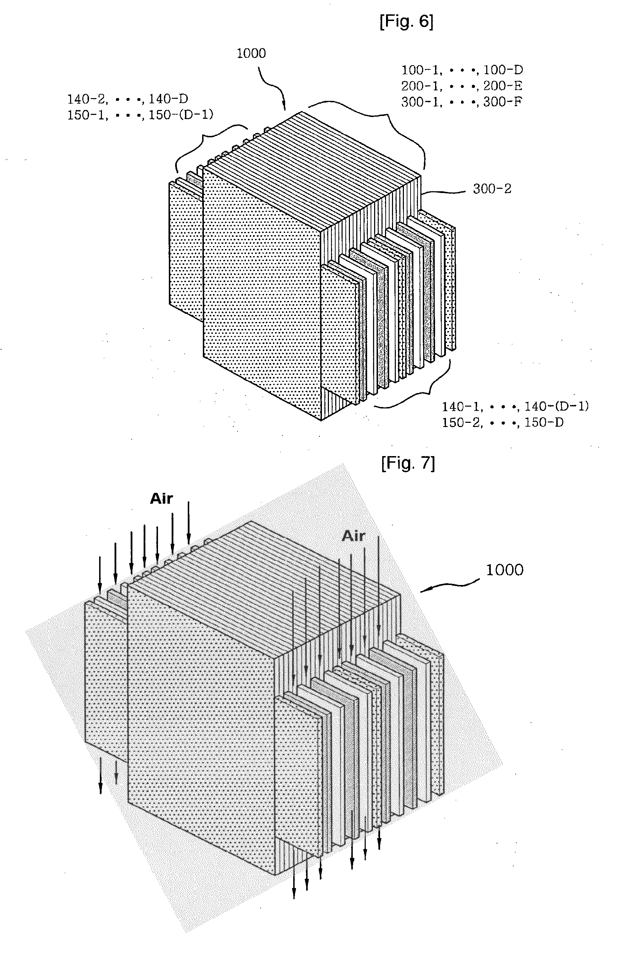

FIG. 5 is an exploded perspective view of a high power lithium battery pack having a high power lithium unit cell, according to the second embodiment of the present invention, FIG. 6 is a perspective view of the high power lithium battery pack having the high power lithium unit cell, according to the second embodiment of the present invention, and FIG. 7 is a perspective view showing a cooling method for the high power lithium battery pack having the high power lithium unit cell, according to the second embodiment of the present invention.

Referring to FIGS. 5 and 6, a high power lithium battery pack 1000 having a high power lithium unit cell, according to the second embodiment of the present invention, include high power lithium unit cells 100-1, ..., 100-D, gaskets 200-1, ..., 200-E, and support plates 300-1, ..., 300-F.

The high power lithium unit cells 100-1, ..., 100-D include anode plates, cathode plates, separation films, anode plate connecting parts, cathode plate connecting parts, anode terminals 140-1, ..., 140-D, and cathode terminals 150-1,..., 150-D, as shown in FIGS. 3 and 4.

According to the preferred embodiment, the high power lithium unit cells 100-1, ..., 100-D are connected to each other in series by connecting the anode terminal of one unit cell to the cathode terminal of a neighboring unit cell or by connecting the cathode terminal of one unit cell to the anode terminal of a neighboring unit cell. Such a series connection may be applied to a high voltage-high power battery of a hybrid car or the like.

The gaskets 200-1, ..., 200-E are laminated on both surfaces of each high power lithium unit cell 100-1, ..., 100-D to be installed between the high power lithium unit cells 100-1, ..., 100-D. The gaskets 200-1, ..., 200-E firmly maintain the high power lithium unit cells 100-1, ..., 100-D during a charging or discharging operation, thus absorbing vibration and shocks, and preventing leakage due to volume expansion.

Typically, when the anode terminals 140-1, ..., 140-D and the cathode terminals 150-1, ..., 150-D exposed to the outside of the high power lithium unit cells 100-1, ..., 100-D are wide, contacting area between the electrode terminals 140-1, ..., 140-D and 150-1, ..., 150-D and a packing material is increased. Thus, the possibility of leakage may increase due to volume expansion, and the permeation of water may occur.

However, the high power lithium battery pack 1000 according to this invention firmly keeps weak portions airtight, using the gaskets 200-1, ..., 200-E, thus preventing leakage or water permeation.

Further, when the high power lithium battery pack 1000 according to this invention is used, the gaskets 200-1, ..., 200-E, serving as a component of a car, absorb shock and vibration, thus improving durability and vibration resisting capability, therefore increasing the life-span and durability of the high power lithium unit cells 100-1, ..., 100-D under vibration conditions similar to those of a car.

The support plates 300-1, ..., 300-F are attached to both surfaces of one of the high power lithium unit cells 100-1, ..., 100-D or are attached between the laminated high power lithium unit cells 100-1, ..., 100-D. Further, the support plates 300-1, ..., 300-F may be inserted between the gaskets 200-1, ..., 200-E disposed on both surfaces of neighboring high power lithium unit cells 100-1, ..., 100-D. The support plates 300-1, ..., 300-F serve to enhance the cooling effect of the high power lithium unit cells 100-1, ..., 100-D, and support the high power lithium unit cells 100-1, ..., 100-D and the gaskets 200-1, ..., 200-E so as to prevent them from being deformed.

Preferably, the support plates 300-1, ..., 300-F are made of a conductive material so as to radiate heat generated by the high power lithium unit cells 100-1, ..., 100-D to the outside. Further, the support plates 300-1, ..., 300-F may protrude outwards from the gaskets 200-1, ..., 200-E so as to provide the same cooling effect as the electrode terminals 140-1, ..., 140-D and 150-1, ..., 150-D.

As shown in FIG. 7, heat generated in the high power lithium battery pack 1000 having the high power lithium unit cell according to this invention is uniformly cooled in all of the high power lithium unit cells 100-1, ..., 100-D by passing cool air through space defined between the anode terminals 140-1, ..., 140-D and the cathode terminals 150-1, ..., 150-D, which protrude outwards from the gaskets 200-1, ..., 200-E.

Conversely, when the temperature of the high power lithium battery pack 1000 having the high power lithium unit cell according to this invention is excessively low and the performance of the high power lithium battery pack is thus deteriorated, hot air passes through the space defined between the anode terminals 140-1, ..., 140-D and the cathode terminals 150-1, ..., 150-D. Thereby, all of the high power lithium unit cells 100-1, ..., 100-D may be heated to a suitable temperature.

Meanwhile, when the support plates 300-1, ..., 300-F protruding out of the gaskets 200-1, ..., 200-E are provided, the protruding parts of the anode terminals 140-1, ..., 140-D, the cathode terminals 150-1, ..., 150-D, and the support plates 300-1, ..., 300-F may be cooled or heated.

Thus, the high power lithium battery pack 1000 having the high power lithium unit cell, according to the present invention, is provided with the wide anode terminals 140-1, ..., 140-D and cathode terminals 150-1, ..., 150-D, so that heat transmission speed is faster in comparison with the prior art, thus achieving a high heat-removal effect.

As described above, the high power lithium battery pack 1000 having the high power lithium unit cell, according to the present invention, cools or heats the protruding parts of the anode terminals 140-1, ..., 140-D, the cathode terminals 150-1, ..., 150-D, and the support plates 300-1, ..., 300-F, thus maintaining the temperature of the high power lithium unit cells 100-1, ..., 100-D to be -20°C to 50°C, and preferably, 0°C to 40°C.

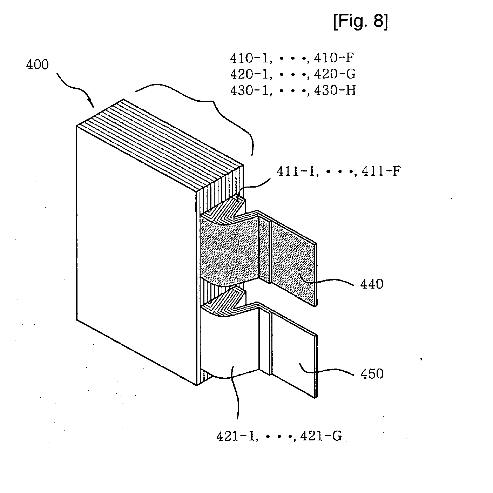

FIG. 8 is a perspective view of a high power lithium unit cell, according to the third embodiment of the present invention.

As shown in FIG. 8, the high power lithium unit cell according to the third embodiment of this invention includes anode plates 410-1, ..., 410-F, cathode plates 420-1, ..., 420-G, separation films 430-1, ..., 430-H, anode plate connecting parts 411-1, ..., 411-F, cathode plate connecting parts 421-1, ..., 421-G, an anode terminal 440, and a cathode terminal 450, similar to the first embodiment.

When comparing the high power lithium unit cell 100 according to the first embodiment shown in FIGS. 3 and 4 with the high power lithium unit cell 400 according to the third embodiment shown in FIG. 8, the high power lithium unit cell 100 according to the first embodiment is constructed so that the anode terminal 140 and the cathode terminal 150 extend in opposite directions from two long sides of four sides of a rectangle. However, the high power lithium unit cell 400 according to the third embodiment is constructed so that the anode terminal 440 and the cathode terminal 450 extend outwards from either of two long sides of a rectangle in such a way as to be spaced apart from each other. In this case, each of the anode and cathode terminals 440 and 450 of the high power lithium unit cell 400 has a width of about 1/8 ~ 1/2 of a long side of the rectangle.

As such, the high power lithium unit cell 400, according to the third embodiment of this invention, is constructed so that the anode and cathode terminals 440 and 450 extend outwards from a long side of the rectangle, the sectional area of each electrode terminal 440, 450 is larger than that of the conventional lithium unit cell of FIG. 1.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Industrial Applicability**

As described above, the present invention provides a high power lithium unit cell and a high power lithium battery pack having the high power lithium unit cell, constructed so that an electrode terminal is provided on a long side of the rectangular unit cell, thus increasing the width of the electrode terminal, thereby reducing heat generation and a potential drop due to the resistance of the electrode terminal during a high power charging or discharging operation. Therefore, the life-span of the battery is prolonged, in addition to reducing the loss of energy.

Further, the present invention provides a high power lithium unit cell and a high power lithium battery pack having the high power lithium unit cell, constructed so that an electrode terminal is directly connected to an electrode layer, thus reducing resistance and thereby reducing the quantity of generated heat. Hence, a localized electrochemical reaction occurring at a position near an electrode terminal of a conventional battery is reduced, and thus it is possible to evenly use respective electrode layers.

Further, the present invention provides a high power lithium unit cell and a high power lithium battery pack having the high power lithium unit cell, which use a wide electrode terminal, thus allowing heat generated in the electrode terminal from being discharged to the outside within a short period of time, and allowing the battery to be heated to a suitable temperature within a short period of time when the temperature of the battery is low.

The present invention provides a high power lithium unit cell and a high power lithium battery pack having the high power lithium unit cell, constructed so that gaskets are laminated on both surfaces of the unit cell, thus preventing leakage or water permeation at a junction of the electrode terminal and a packing material due to volume expansion during a charging or discharging operation, and absorbing shocks and vibration, therefore increasing durability and life-span thereof.

The present invention provides a high power lithium unit cell and a high power lithium battery pack having the high power lithium unit cell, constructed so that anode and cathode terminals protruding outwards from gaskets have wide heat transmission areas, thus controlling a cooling or heating operation, required for maintaining a proper temperature so as to ensure optimal performance of the battery, within a very short period of time.

**Claims**

1. A lithium battery pack (1000), comprising:

    at least one lithium unit cell (100, 400) comprising:

        at least one rectangular cathode plate (110, 410) having a cathode collector, at least one surface of the cathode collector being coated with an active material of cathode;
        at least one rectangular anode plate (120, 420) having an anode collector, at least one surface of the anode collector being coated with an active material of anode;
        at least one separation film (130, 430) inserted between cathode plate and anode plate, and providing electric insulation;
        a cathode terminal (140, 440) attached to a cathode plate connecting part (111, 411) which protrudes from either of two long sides of four sides of each of the at least one rectangular cathode plate; and
        an anode terminal (150, 450) attached to an anode plate connecting part (121, 421) which protrudes from either of two long sides of four sides of each of the at least one rectangular anode plate,
        wherein the separation film, the anode plate, the separation film, the cathode plate, and the separation film are laminated, and/or a plurality of the anode plates and the cathode plates are sequentially laminated between separation films,
        **characterized in that** the lithium battery pack (1000) comprises:

        at least two gaskets (200) laminated on both surfaces of the lithium unit cell and located between the separation films or on one separation film; and
        a pair of support plates (300) laminated on the outermost gaskets at least and protruding outwards from the gaskets (200) so as to provide the same cooling effect as the electrode terminals (140, 440, 150, 450).

2. The lithium battery pack according to claim 1, wherein the cathode terminal (140) and the anode terminal (150) protrude in opposite directions.

3. The lithium battery pack according to claim 2, wherein the cathode terminal has a width corresponding to about 1/5 to 1 of a length of the long side of the cathode plate, and the anode terminal has a width corresponding to about 1/5 to 1 of a length of the long side of the anode plate.

4. The lithium battery pack according to claim 1, wherein the cathode plate connecting part and the anode plate connecting part are connected to the cathode terminal and the anode terminal, respectively, through welding.

5. The lithium battery pack according to claim 1, wherein the cathode plate connecting part and the anode plate connecting part are coated with a conductive material and compressed against the cathode terminal and the anode terminal so as to be connected to the cathode terminal and the anode terminal, respectively.

6. The lithium battery pack according to claim 1, wherein the cathode plate connecting part and the anode plate connecting part are connected to the cathode terminal and the anode terminal, respectively, using an adhesive containing a conductive material.

7. The lithium battery pack according to claim 7 or claim 8, wherein the conductive material is at least one of gold or a carbon nanotube.

8. The lithium battery pack according to claim 1, wherein each of the support plates is made of a conductive material for heat emission.

9. The lithium battery pack according to claim 1, wherein air flows through space defined between the cathode terminal, the anode terminal, and the support plates, thus maintaining temperature of the lithium unit cell.

10. The lithium battery pack according to claim 9, wherein the lithium unit cell maintains a temperature range of -20°C to 50°C.

11. The lithium battery pack according to claim 9, wherein the lithium unit cell maintains a temperature range of 0°C to 40°C.

## Patentansprüche

1. Lithiumbatteriepack (1000), umfassend:

   wenigstens eine Lithiumelementarzelle (100, 400), umfassend:

   wenigstens eine rechteckige Kathodenplatte (110, 410) mit einem Kathodenkollektor, wobei wenigstens eine Oberfläche des Kathodenkollektors mit einem aktiven Kathodenmaterial beschichtet ist,
   wenigstens eine rechteckige Anodenplatte (120, 420) mit einem Anodenkollektor, wobei wenigstens eine Oberfläche des Anodenkollektors mit einem aktiven Anodenmaterial beschichtet ist,
   wenigstens einen Trennfilm (130, 430), der zwischen die Kathodenplatte und die Anodenplatte eingefügt ist und für eine elektrische Isolierung sorgt,
   einen Kathodenanschluss (140, 440), der an einem Kathodenplattenverbindungsteil (111, 411) befestigt ist, das von einer der beiden langen Seiten der vier Seiten von jeder der wenigstens einen rechteckigen Kathodenplatte hervorsteht, und
   einen Anodenanschluss (150, 450), der an einem Anodenplattenverbindungsteil (121, 421) befestigt ist, das von einer der beiden langen Seiten der vier Seiten von jeder der wenigstens einen rechteckigen Anodenplatte hervorsteht,
   wobei der Trennfilm, die Anodenplatte, der Trennfilm, die Kathodenplatte und der Trennfilm laminiert sind und/oder mehrere Anodenplatten und Kathodenplatten sequenziell zwischen die Trennfilme laminiert sind, **dadurch gekennzeichnet, dass** das Lithiumbatteriepack (1000) umfasst:
   wenigstens zwei Dichtungen (200), die auf beiden Oberflächen der Lithiumelementarzelle laminiert sind und zwischen den Trennfilmen oder auf einem Trennfilm angeordnet sind, und
   ein Paar Trägerplatten (300), das wenigstens auf die äußerste Dichtung laminiert ist und nach außen von Dichtungen (200) hervorsteht, um den gleichen Kühleffekt wie die Elektrodenanschlüsse (140, 440, 150, 450) zu gewähren.

**2.** Lithiumbatteriepack nach Anspruch 1, wobei der Kathodenanschluss (140) und der Anodenanschluss (150) in gegenüberliegende Richtungen hervorstehen.

**3.** Lithiumbatteriepack nach Anspruch 2, wobei der Kathodenanschluss eine Breite aufweist, die ungefähr 1/5 bis 1 von einer Länge der langen Seite der Kathodenplatte entspricht, und der Anodenanschluss eine Breite aufweist, die ungefähr 1/5 bis 1 einer Länge der langen Seite der Anodenplatte entspricht.

**4.** Lithiumbatteriepack nach Anspruch 1, wobei das Kathodenplattenverbindungsteil und das Anodenplattenverbindungsteil mit dem Kathodenanschluss bzw. dem Anodenanschluss mittels Schweißen verbunden sind.

**5.** Lithiumbatteriepack nach Anspruch 1, wobei das Kathodenplattenverbindungsteil und das Anodenplattenverbindungsteil mit einem leitfähigen Material beschichtet sind und gegen den Kathodenanschluss und den Anodenanschluss gepresst sind, um mit dem Kathodenanschluss bzw. dem Anodenanschluss verbunden zu sein.

**6.** Lithiumbatteriepack nach Anspruch 1, wobei das Kathodenplattenverbindungsteil und das Anodenplattenverbindungsteil mit dem Kathodenanschluss bzw. dem Anodenanschluss mittels eines Adhäsivs verbunden sind, das ein leitfähiges Material enthält.

**7.** Lithiumbatteriepack nach Anspruch 7 oder 8, wobei das leitfähige Material wenigstens eines von Gold oder Carbon-Nanoröhre ist.

**8.** Lithiumbatteriepack nach Anspruch 1, wobei jede der Trägerplatten aus einem leitfähigen Material zur Wärmeabstrahlung hergestellt ist.

**9.** Lithiumbatteriepack nach Anspruch 1, wobei Luft durch eine Aussparung fließt, die zwischen dem Kathodenanschluss, dem Anodenanschluss und den Trägerplatten abgegrenzt ist, wodurch die Temperatur der Lithiumelementarzelle beibehalten wird.

**10.** Lithiumbatteriepack nach Anspruch 9, wobei die Lithiumelementarzelle eine Temperatur im Bereich von -20 °C bis 50 °C beibehält.

**11.** Lithiumbatteriepack nach Anspruch 9, wobei die Lithiumelementarzelle eine Temperatur im Bereich von 0 °C bis 40 °C beibehält.

**Revendications**

**1.** Bloc de batteries au lithium (1000), comprenant :

au moins une cellule unitaire au lithium (100, 400) comprenant :

au moins une plaque de cathode rectangulaire (110, 410) ayant un collecteur de cathode, au moins une surface du collecteur de cathode étant recouverte avec un matériau actif de cathode ;
au moins une plaque d'anode rectangulaire (120, 420) ayant un collecteur d'anode, au moins une surface du collecteur d'anode étant recouverte avec un matériau actif d'anode ;
au moins un film de séparation (130, 430) inséré entre la plaque de cathode et la plaque d'anode, et fournissant l'isolation électrique ;
une borne de cathode (140, 440) fixée sur une partie de raccordement de plaque de cathode (111, 411) qui fait saillie à partir de l'un ou l'autre des deux côtés long des quatre côtés de chacune de la au moins une plaque de cathode rectangulaire ; et
une borne d'anode (150, 450) fixée sur une partie de raccordement de plaque d'anode (121, 421) qui fait saillie à partir de l'un ou l'autre des deux côtés long des quatre côtés de chacune de la au moins une plaque d'anode rectangulaire,
dans lequel le film de séparation, la plaque d'anode, le film de séparation, la plaque de cathode et le film de séparation sont déposés en couche, et/ou une pluralité de plaques d'anode et des plaques de cathode sont déposées séquentiellement en couche entre les films de séparation,

**caractérisé en ce que** le bloc de batteries au lithium (1000) comprend :

au moins deux joints (200) déposés en couche sur les deux surfaces de la cellule unitaire au lithium et positionnés entre les films de séparation ou sur un film de séparation ; et

une paire de plaques de support (300) déposées en couche sur les joints situés le plus à l'extérieur au moins et faisant saillie vers l'extérieur des joints (200) afin de fournir le même effet de refroidissement que les bornes d'électrode (140, 440, 150, 450).

2. Bloc de batteries au lithium selon la revendication 1, dans lequel la borne de cathode (140) et la borne d'anode (150) font saillie dans des directions opposées.

3. Bloc de batteries au lithium selon la revendication 2, dans lequel la borne de cathode a une largeur correspondant à environ 1/5 à 1 d'une longueur du côté long de la plaque de cathode, et la borne d'anode a une largeur correspondant à environ 1/5 à 1 d'une longueur du côté long de la plaque d'anode.

4. Bloc de batteries au lithium selon la revendication 1, dans lequel la partie de raccordement de plaque de cathode et la partie de raccordement de plaque d'anode sont raccordées à la borne de cathode et à la borne d'anode, respectivement, par soudage.

5. Bloc de batteries au lithium selon la revendication 1, dans lequel la partie de raccordement de plaque de cathode et la partie de raccordement de plaque d'anode sont recouvertes avec un matériau conducteur et comprimées contre la borne de cathode et la borne d'anode afin d'être raccordées à la borne de cathode et à la borne d'anode, respectivement.

6. Bloc de batteries au lithium selon la revendication 1, dans lequel la partie de raccordement de plaque de cathode et la partie de raccordement de plaque d'anode sont raccordées à la borne de cathode et à la borne d'anode, respectivement, en utilisant une colle contenant un matériau conducteur.

7. Bloc de batteries au lithium selon la revendication 7 ou la revendication 8, dans lequel le matériau conducteur est au moins l'un parmi l'or ou un nanotube de carbone.

8. Bloc de batteries au lithium selon la revendication 1, dans lequel chacune des plaques de support est réalisée avec un matériau conducteur pour l'émission de chaleur.

9. Bloc de batteries au lithium selon la revendication 1, dans lequel l'air s'écoule à travers l'espace défini entre la borne de cathode, la borne d'anode et les plaques de support, maintenant ainsi la température de la cellule unitaire au lithium.

10. Bloc de batteries au lithium selon la revendication 9, dans lequel la cellule unitaire au lithium conserve une plage de température de -20 °C à 50 °C.

11. Bloc de batteries au lithium selon la revendication 9, dans lequel la cellule unitaire au lithium conserve une plage de température de 0 °C à 40 °C.

[Fig. 1]

[Fig. 2]

[Fig. 3]

12

[Fig. 4]

121-1, • • •, 121-A

110-1, • • •, 110-A
120-1, • • •, 120-B
130-1, • • •, 130-C

150

111-1, • • •, 111-A

140

100

EP 1 831 949 B1

[Fig. 5]

14

[Fig. 6]

1000

140-2, • • •, 140-D
150-1, • • •, 150-(D-1)

100-1, • • •, 100-D
200-1, • • •, 200-E
300-1, • • •, 300-F

300-2

140-1, • • •, 140-(D-1)
150-2, • • •, 150-D

[Fig. 7]

Air

Air

1000

[Fig. 8]

400

410-1, • • •, 410-F
420-1, • • •, 420-G
430-1, • • •, 430-H

411-1, • • •, 411-F

440

450

421-1, • • •, 421-G

**EP 1 831 949 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0570590 A